## Europäisches Patentamt

## European Patent Office

## Office européen des brevets

(19)

(11) Veröffentlichungsnummer: **0 218 865**
**B1**

(12) **EUROPÄISCHE PATENTSCHRIFT**

(45) Veröffentlichungstag der Patentschrift:
**27.12.89**

(51) Int. Cl.⁴: **G01N 21/89**, G02B 5/00

(21) Anmeldenummer: **86111838.8**

(22) Anmeldetag: **27.08.86**

(54) Prüfanordnung zur berührungslosen Ermittlung von Defekten in nicht strukturierten Flächen.

(30) Priorität: **09.09.85 DE 3532117**

(43) Veröffentlichungstag der Anmeldung:
**22.04.87 Patentblatt 87/17**

(45) Bekanntmachung des Hinweises auf die Patenterteilung:
**27.12.89 Patentblatt 89/52**

(84) Benannte Vertragsstaaten:
**CH DE FR GB LI**

(56) Entgegenhaltungen:
**EP-A- 0 146 005**
**FR-A- 2 477 288**
**US-A- 3 917 414**
**US-A- 4 378 159**

(73) Patentinhaber: **Siemens Aktiengesellschaft,
Wittelsbacherplatz 2, D-8000 München 2(DE)**

(72) Erfinder: **Heine, Wolfgang, Margaretenplatz 4,
D-8000 München 70(DE)**
Erfinder: **Huber, Walter, Josef-Schauer-Strasse 13,
D-8039 Puchheim(DE)**

**Beschreibung**

Die Erfindung betrifft eine Prüfanordnung zur berührungslosen Ermittlung von Defekten in nicht strukturierten Flächen nach dem Oberbegriff des Anspruchs 1.

Zum Auffinden von Defekten in nicht strukturierten Flächen wird die zu untersuchende Fläche eines Prüflings mit einem Laserstrahl abgescannt. Die hierzu erforderliche Relativbewegung zwischen Laserstrahl und Prüfling wird dabei meist in einer ersten Richtung durch einen im Strahlengang angeordneten Scanspiegel und in einer zur ersten Richtung senkrechten zweiten Richtung durch Verfahren des Prüflings erzeugt. Trifft der Laserstrahl auf eine Defektstelle, so wird das Licht gestreut bzw. gebeugt und kann dann im Auflicht bzw. im Durchlicht, von einem optoelektronischen Empfänger detektiert werden, welcher dem aufgefundenen Defekt entsprechendes Signal liefert. Um dem optoelektronischen Empfänger einen möglichst großen Teil des an einer Defektstelle abgelenkten Lichtes zuzuführen, wird dieses Licht zuvor in einer entsprechenden optischen Einrichtung gesammelt. Als optische Sammeleinrichtung wird dabei beispielsweise eine nach dem Prinzip der Ulbricht'schen Kugel wirkende Halbkugel verwendet, welche die einzelnen von einer Defektstelle ausgehenden Lichtströme integriert, d.h. über die Innenfläche der Halbkugel voll erfaßt. Neben der Kugelform können jedoch auch andere für optische Sammelelemente gebräuchliche Formen wie elliptische Hohlkörper, Ellipsoide, paraboförmige Hohlkörper oder Paraboloide und dergleichen verwendet werden.

Bei den bekannten, häufig auch als Lasercanner bezeichneten Prüfanordnungen hat der als Abtastlichtstrahl verwendete Laserstrahl einem relativ großen Lichthof, der insbesondere auf Streulicht von Linsen, Spiegeloberflächen und vom Laser selbst zurückzuführen ist. Dieser Lichthof verursacht dann ein ungünstiges Signal-Rausch-Verhältnis, so daß kleinere Defekte nicht mehr zuverlässig ermittelt werden können. Bei der Prüfung von noch nicht strukturierten Masken für die Halbleitertechnik, von Compact-Disks für die Bild- und Tonspeicherung und von Magnetspeicherplatten kommt es jedoch gerade darauf an, in den Oberflächen oder in einzelnen Schichten auch kleinste Defekte mit Abmessungen im Submikrometerbereich zu erfassen.

Der Erfindung liegt die Aufgabe zugrunde, eine Prüfanordnung zur berührungslosen Ermittlung von Defekten in nicht strukturierten Flächen zu schaffen, mit welcher auch kleinste Defekte mit Abmessungen im Submikrometerbereich zuverlässig erkannt werden können.

Diese Aufgabe wird bei einer gattungsgemäßen Prüfanordnung durch die kennzeichnenden Merkmale des Anspruchs 1 gelöst.

Der Erfindung liegt die Erkenntnis zugrunde, daß durch eine in den Strahlengang eingefügte Blende der Streulichtanteil des Abtastlichtstrahls so weit reduziert werden kann, daß aufgrund eines entsprechend verbesserten Signal-Rausch-Verhältnisses auch kleinste Defekte im Submikrometerbereich zuverlässig erfaßt werden können. Voraussetzung für eine derartige Wirkung der Blende ist dabei, daß sie mindestens zwei, vorzugsweise eine Vielzahl, hintereinander angeordneter Blendenkanten aufweist, wobei jede nachgeordnete Blendenkante das von der vorausgehenden Blendenkante in den Schattenraum gebeugte Licht zumindest teilweise erfaßt. Bei einer derartigen Anordnung wird also in Richtung des Abtastlichtstrahls gesehen mit jeder Blendenkante das gebeugte Licht weiter reduziert, wobei sich das Strahlprofil des Abtastlichtstrahls in Richtung auf eine Rechteckform verändert.

Gemäß einer bevorzugten weiteren Ausgestaltung der Erfindung sind die Blendenkanten derart hintereinander angeordnet, daß jede nachgeordnete Blendenkante das erste Nebenmaximum des von der vorausgehenden Blendenkante in den zugeordneten Schattenraum gebeugten Lichtes anschneidet. Durch einen derartigen Ausschnitt der Nebenmaxima wird ein besonders großer Anteil des Streulichts unwirksam gemacht.

Die Blendenkanten sind vorzugsweise als scharfe Schneiden ausgebildet, wodurch die Reflexionsoberflächen der Blendenkanten und der Anteil des an ihnen reflektierten Streulichts verringert werden. Außerdem ist es auch vorteilhaft, wenn die zwischen den Blendenkanten liegenden Bereiche der Blende eine lichtabsorbierende Oberfläche aufweisen, so daß das in den Schattenraum und in den Lichtraum gebeugte Licht absorbiert und damit unwirksam gemacht werden kann.

Bei Prüfanordnungen, bei welchen im Strahlengang des Abtastlichtstrahls eine Ablenkeinrichtung angeordnet ist, wird die Blende in Richtung des Abtastlichtstrahls gesehen zweckmäßigerweise nach der Ablenkeinrichtung angeordnet. Die Blende kann dann auch das von der Ablenkeinrichtung, beispielsweise einem Scanspiegel, erzeugte Streulicht erfassen und reduzieren bzw. unwirksam machen.

Bei Verwendung einer Ablenkeinrichtung für den Abtastlichtstrahl werden die Blendenkanten dann vorzugsweise parallel zur Ablenkebene des Abtastlichtstrahls ausgerichtet, so daß der Durchtritt des für die Abtastung erwünschten Lichtanteils nicht behindert wird. Den durch die Ablenkeinrichtung erzeugten Extremlagen des Abtastlichtstrahls können dann zusätzliche Blendenkanten der Blende zugeordnet werden, so daß der Streulichtanteil auch im Bereich der Extremlagen reduziert werden kann.

Gemäß einer besonders bevorzugten Ausgestaltung der Erfindung sind die Blendenkanten durch ein sägezahnförmiges Profil auf der Innenseite von einander gegenüberliegenden Seitenwänden der Blende gebildet. Hierdurch wird die Herstellung der Blende erheblich vereinfacht und eine fixe Relativlage der Blendenkanten einer Seitenwand gewährleistet. Außerdem kann durch das sägezahnförmige Profil eine Vielzahl von Blendenkanten auf einem engen Raum untergebracht werden. Diese Vorteile ergeben sich dann auch, wenn die zusätzlichen Blendenkanten durch ein sägezahnförmiges Profil auf der Innenseite von einander gegenüberliegenden und gegensinnig geneigten Endwänden der Blende gebildet sind. Vorzugsweise sind die Blendenkanten dann versetzt zu den zusätzlichen Blendenkanten angeordnet, so daß die Blendenkanten und die zusätzlichen Blendenkanten in den Eckbereichen der Blende ohne sich zu stören ineinander eingreifen können. Sind die beiden Seitenwände und die beiden Endwände der Blende dann verstell- und justierbar miteinander verbunden, so kann durch eine entsprechende Justierung die Wirkung der Blende auf einfache Weise optimiert werden.

Im Hinblick auf eine möglichst effektive Reduzierung des Streulichtanteils ist es auch besonders vorteilhaft, wenn die Breite des durch die erste Blendenkante gebildeten Blendenspaltes zumindest annähernd dem Durchmesser des Abtastlichtstrahls entspricht.

Die von den Blendenkanten in den Lichtraum gebeugten Strahlen können durch die Blende hindurchtreten, wenn sie steiler sind als die Diagonale zwischen der ersten und der letzten Blendenkante. Der Diagonalwinkel sollte daher möglichst klein gehalten werden. Dies wird durch entsprechende Bemessungen erreicht, bei welchen der Abstand zwischen der ersten Blendenkante und der letzten Blendenkante zumindest dem 10-fachen vorzugsweise etwa dem 100-fachen bis 200-fachen, Wert des Durchmessers des Abtastlichtstrahls entspricht.

Ein Ausführungsbeispiel der Erfindung ist in der Zeichnung dargestellt und wird im folgenden näher beschrieben.

Es zeigen

Figur 1 eine Prüfanordnung zur berührungslosen Ermittlung von Defekten in nicht strukturierten Flächen in stark vereinfachter schematischer Darstellung,

Figur 2 Einzelheiten der in der Prüfanordnung nach Figur 1 eingesetzten Blende zur Reduzierung des Streulichtanteils,

Figur 3 das Wirkungsprinzip der in den Figuren 1 und 2 dargestellten Blende zur Reduzierung des Streulichtanteils,

Figur 4 das Strahlprofil des Abtastlichtstrahls vor dem Eintritt in die Blende zur Reduzierung des Streulichtanteils und

Figur 5 das Strahlprofil des Abtastlichtstrahls nach dem Durchtritt durch die Blende zur Reduzierung des Streulichtanteils.

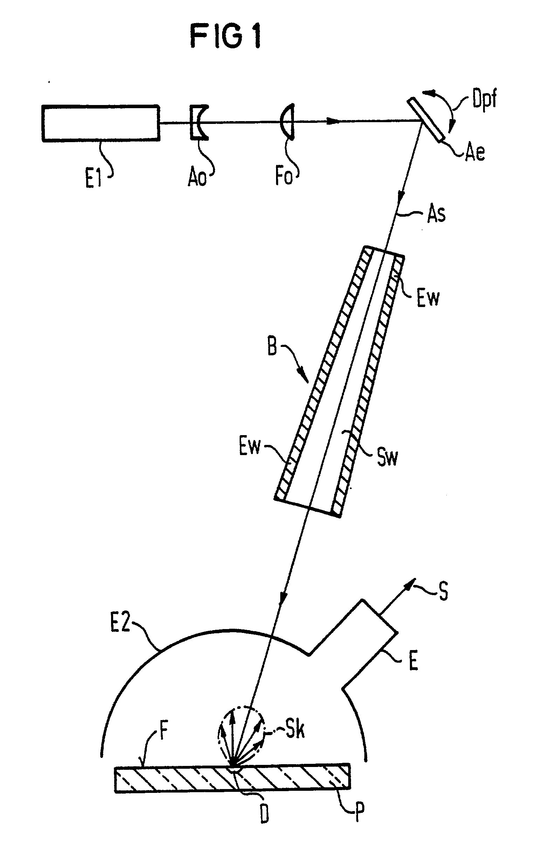

Figur 1 zeigt in stark vereinfachter schematischer Darstellung eine Prüfanordnung zur berührungslosen Ermittlung von Defekten D in nicht strukturierten Flächen F, bei welcher im Strahlengang einer Einrichtung E1 zur Erzeugung eines Abtastlichtstrahls As nacheinander eine Aufweitoptik Ao, eine Fokusierungsoptik Fo, eine Ablenkeinrichtung Ae und eine Blende B zur Reduzierung des Streulichtanteils angeordnet sind. Nach dem Durchtritt durch die Blende B gelangt der durch die Ablenkeinrichtung Ae entsprechend dem Doppelpfeil Dpf in der Zeichnungsebene periodische hin- und herbewegte Abtastlichtstrahl As durch einen Schlitz einer noch zu erläuternden Einrichtung E2 hindurch auf die zu untersuchende Fläche F eines mit P bezeichneten Prüflings. Neben der bereits erwähnten Auslenkung des Abtastlichtstrahls wird der Prüfling P in einer zur Zeichnungsebene senkrechten Richtung verfahren, so daß die Fläche F durch den Abtastlichtstrahl abgescannt wird. Um den abzutastenden Bereich der Fläche F, bei welcher es sich auch um eine Zwischenschicht handeln kann, zu vergrößern, kann der Prüfling P gegebenenfalls auch mit einer mäanderförmigen Bahn verfahren werden. Tritt der Abtastlichtstrahl As auf fehlerfreie Bereiche der Fläche F, so verläßt er in Reflexionsrichtung die Einrichtung E2 wieder durch den Schlitz, durch welchen er eingetreten ist. Trifft der Abtastlichtstrahl dagegen auf einen Defekt D, bei welchem es sich um eine Pore der Fläche F, um den Einschluß eines Fremdkörpers, um eine Verunreinigung der Oberfläche oder dergleichen handeln kann, so wird das Licht gestreut und gebeugt, wobei die entsprechende Streukeule mit Sk bezeichnet ist. Das an der Defektstelle gestreute und gebeugte Licht wird dann durch die Einrichtung E2 auf der lichtempfindlichen Fläche eines optoelektronischen Empfängers E zumindest teilweise gesammelt, dessen Ausgangssignal S den aufgefundenen Defekt D anzeigt.

Bei der Einrichtung E1 zur Erzeugung des Abtastlichtstrahls As handelt es sich insbesondere um einen Laser, beispielsweise um einen HeCd-Laser, dessen Strahl in der Aufweitoptik Ao beispielsweise von einem Ausgangsdurchmesser von 1 mm auf einen Durchmesser von 4 mm aufgeweitet wird. Der aufgeweitete Laserstrahl wird dann durch die Fokusierungsoptik Fo auf die Fläche F fokussiert, wobei der Durchmesser des Strahls an der Auftreffstelle etwa 50 µm beträgt.

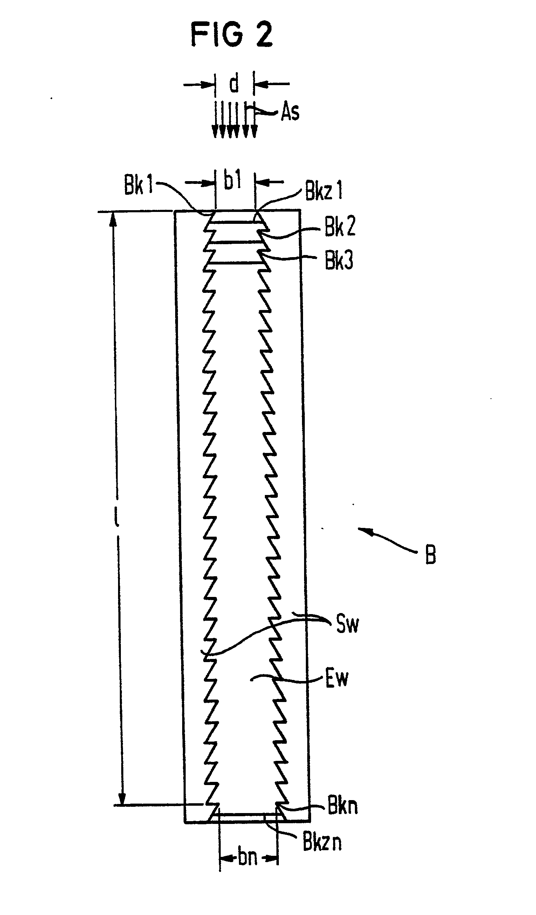

Die Blende B umfaßt zwei mit Sw bezeichnete Seitenwände und zwei mit Ew bezeichnete Endwände, wobei Lage und Neigung der beiden Endwände Ew auf die maximale Auslenkung des Abtastlichtstrahls As abgestimmt sind. Die beiden Seitenwände Sw sind kurz vor bzw. hinter der in der Zeichnungsebene liegenden Ablenkebene des Abtastlichtstrahls As angeordnet. Weitere Einzelheiten über den Aufbau und die Wirkungsweise der Blende B werden an späterer Stelle anhand der Figuren 2 bzw. 3 bis 5 erläutert.

Bei der Einrichtung E2 zum Sammeln des an der Defektstelle abgelenkten Lichtes handelt es sich um eine nach unten offene Halbkugel, welche über der Fläche F des Prüflings P angeordnet wird. Wie bei einem Kugel- oder Integralphometer nach Ulbricht ist die Halbkugel innen mattweiß angestrichen, so daß das an dem Defekt D gestreute und gebeugte Licht vielfach diffus reflektiert und jedes Flächenelement der Innenfläche der Halbkugel annähernd gleich stark beleuchtet wird. Auf diese Weise werden die von einem Defekt D ausgehenden Lichtströme erfaßt und der im Bereich der Innenfläche der Halbkugel liegenden lichtempfindlichen Fläche des beispielsweise als Photomultiplier ausgebildeten optoelektronischen Empfängers E teilweise zugeführt. Andere Formen der Einrichtung E2, welche die erwünschte Sammelfunktion erfüllen, sind ebenfalls möglich. Abweichend von der dargestellten Untersuchung der Fläche F im Auflicht kann die Untersuchung auch im Durchlicht vorgenommen werden, wobei die Einrichtung E2 dann in entsprechender Weise auf der Unterseite des Prüflings P angeordnet wird.

Die Figur 2 zeigt eine seitliche Ansicht auf die Blende B mit abgenommener vorderer Endwand Ew. Die Innenseiten der Seitenwände Sw sind mit einem sägezahnförmigen Profil versehen, durch welches jeweils beispielsweise auf gleicher Höhe einander gegenüberliegende Blendenkanten Bk1, Bk2 bis Bkn gebildet werden, wobei im dargestellten Ausführungsbeispiel n = 30 ist. Die senkrecht zur Zeichnungsebene nach hinten verlaufenden Blendenkanten Bk1 bis Bkn bilden jeweils Blendenspalte, deren Breite b1 bis bn in Richtung des Abtastlichtstrahls As zunimmt. In die beiden schräg gegeneinander geneigten Endwände Ew ist innen ebenfalls ein sägezahnförmiges Profil eingebracht, durch welches in Figur 2 nur angedeutete zusätzliche Blendenkanten Bkz1 bis Bkzn gebildet werden. Diese den Extremlagen des Abtastlichtstrahls As zugeordneten zusätzlichen Blendenkanten Bkz1 bis Bkzn sind gegenüber den Blendenkanten Bk1 bis Bkn so versetzt, daß in den Eckbereichen der aus den beiden Seitenwänden Sw und den beiden Endwänden Ew verstell- und justierbar zusammengeschraubten Blende B keine gegenseitige Behinderung auftreten kann. Die beiden Seitenwände Sw und die beiden Endwände Ew bestehen aus Aluminium, wobei die profilierten Innenflächen jeweils mattschwarz eloxiert sind.

Die Breite b1 des durch die erste Blendenkante Bk1 gebildeten Blendenspaltes entspricht vorzugsweise dem Durchmesser d des durch Pfeile angedeuteten Abtastlichtstrahls As an dieser Stelle und beträgt im dargestellten Ausführungsbeispiel 1 mm. Die Breite bn des durch die letzte Blendenkante Bkn gebildeten Blendenspaltes beträgt demgegenüber 1,5 mm.

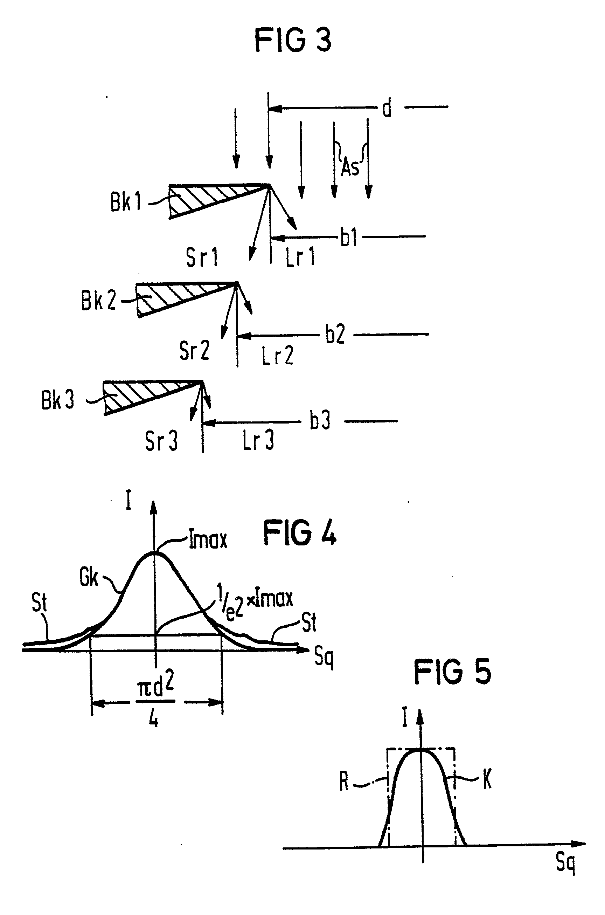

Figur 3 zeigt das Wirkungsprinzip der Blende B, wobei lediglich die ersten drei Blendenkanten Bk1, Bk2 und Bk3 angedeutet sind. Die erste Blendenkante Bk1 bildet einen Blendenspalt der Breite b1, dessen Lichtraum mit Lr1 und dessen Schattenraum mit Sr1 bezeichnet sind. Die zweite Blendenkante Bk2 bildet einen Blendenspalt der Breite b2, dessen Lichtraum mit Lr2 und dessen Schattenraum mit Sr2 bezeichnet sind. Die dritte Blendenkante Bk3 bildet einen Blendenspalt der Breite b3, dessen Lichtraum mit Lr3 und dessen Schattenraum mit Sr3 bezeichnet sind.

Die Breite b1 des durch die erste Blendenkante Bk1 gebildeten Blendenspaltes ist derart bemessen, daß sie zumindest annähernd gleich dem Durchmesser d des Abtastlichtstrahls As ist. Die erste Blendenkante Bk1 beugt dann das Licht sowohl in den Schattenraum Sr1 als auch in den Lichtraum Lr1. Die zweite Blendenkante Bk2 ist nun derart im Schattenraum Sr1 angeordnet, daß sie das erste Nebenmaximum des von der ersten Blendenkante Bk1 in den zugeordneten Schattenraum Sr1 gebeugten Lichtes anschneidet. Die zweite Blendenkante Bk2 beugt dann das Licht wieder sowohl in den zugeordneten Schattenraum Sr2 als auch in den zugeordneten Lichtraum Lr2. Entsprechend dem vorstehend aufgezeigten Wirkungsprinzip ist dann die dritte Blendenkante Bk3 derart im Schattenraum Sr2 angeordnet, daß sie das erste Nebenmaximum des von der zweiten Blendenkante Bk2 in den zugeordneten Schattenraum Sr2 gebeugten Lichts anschneidet. Es ist ersichtlich, daß das gebeugte Licht in Richtung des Abtastlichtstrahls As gesehen laufend reduziert wird und somit der Lichthof des Abtastlichtstrahls As immer weiter reduziert wird.

In Figur 4 ist die Intensität I des Abtastlichtstrahls As vor dem Eintritt in die Blende B (vgl. Figuren 1 und 2) über dem Strahlquerschnitt Sq aufgetragen. Die resultierende Glockenkurve oder Gauß-Verteilungs-Kurve ist mit Gk bezeichnet, während der unerwünschte Streulicht anteil des Abtastlichtstrahls As durch Kurvenzweige St aufgezeigt ist. Bei der Intensität I = 1/e2 Imax beträgt der Strahlquerschnitt Sq = $\pi \cdot$ d2/4, wobei d der bereits erwähnte Durchmesser des Abtastlichtstrahls ist.

In Figur 5 ist die Intensität I des Abtastlichtstrahls As nach dem Austritt aus der Blende B über dem Strahlquerschnitt Sq aufgetragen, wobei die resultierende Kurve mit K bezeichnet ist. Es ist ersichtlich, daß durch die Wirkung der Blende B und die Abschattung des Streulichts die typische Glockenkurve Gk gemäß Figur 4 praktisch seitlich beschnitten wird und die resultierende Kurve K sich einer strichpunktiert angedeuteten Rechteckform R nähert. Der Lichthof des Abtastlichtstrahls As wird durch die Wirkung der Blende B zumindest weitgehend beseitigt. Als Folge davon wird das Signal-Rausch-Verhältnis der in Figur 1 aufgezeigten Prüfanordnung derart verbessert, daß auch kleinste Defekte mit Abmessungen im Submikrometerbereich zuverlässig erfaßt werden können.

## Patentansprüche

1. Prüfanordnung zur berührungslosen Ermittlung von Defekten in nicht strukturierten Flächen, mit

- einer Einrichtung zur Erzeugung eines Abtastlicht strahls (E1),
- einer Einrichtung zum Sammeln des an einer Defektstelle abgelenkten Lichtes (E2) und mit
- einem optoelektronischen Empfänger (E) zur Detektion des gesammelten Lichts, wobei
- im Strahlengang des Abtastlichtstrahls (As) eine Blende (B) angebracht ist,
dadurch **gekennzeichnet**, daß die Blende (B) zur Reduzierung des Streulichtanteils mindestens zwei Blendenkanten (Bk1, Bk2) aufweist, die derart hintereinander angeordnet sind, daß jede nachgeordnete Blendenkante (Bk2) das von der vorausgehenden Blendenkante (Bk1) in den Schattenraum gebeugte Licht zumindest teilweise erfaßt.

2. Prüfanordnung nach Anspruch 1, dadurch **gekennzeichnet**, daß die Blendenkanten (Bk1, Bk2) derart hintereinander angeordnet sind, daß jede nachgeordnete Blendenkante (Bk2) das erste Nebenmaximum des von der vorausgehenden Blendenkante (Bk1) in den zugeordneten Schattenraum (Sr1) gebeugten Lichtes anschneidet.

3. Prüfanordnung nach Anspruch 1 oder 2, dadurch **gekennzeichnet**, daß die Blende (B) eine Vielzahl hintereinander angeordneter Blendenkanten (Bk1 bis Bkn) aufweist.

4. Prüfanordnung nach einem der vorhergehenden Ansprüche, dadurch **gekennzeichnet**, daß die Blendenkanten (Bk1 bis Bkn) als scharfe Schneiden ausgebildet sind.

5. Prüfanordnung nach einem der vorhergehenden Ansprüche, dadurch **gekennzeichnet**, daß die zwischen den Blendenkanten (Bk1 bis Bkn) liegenden Bereiche der Blende (B) eine lichtabsorbierende Oberfläche aufweisen.

6. Prüfanordnung nach einem der vorhergehenden Ansprüche, bei welcher im Strahlengang des Abtastlichtstrahls (As) eine Ablenkeinrichtung (Ae) angeordnet ist und bei der die Blende (B) in Richtung des Abtastlichtstrahls (As) gesehen nach der Ablenkeinrichtung (Ae) angeordnet ist.

7. Prüfanordnung nach Anspruch 6, dadurch **gekennzeichnet**, daß die Blendenkanten (Bk1 bis Bkn) jeweils parallel zur Ablenkebene des Abtastlichtstrahls (As) ausgerichtet sind.

8. Prüfanordnung nach Anspruch 7, dadurch **gekennzeichnet**, daß den durch die Ablenkeinrichtung (Ae) erzeugten Extremlageb des Abtastlichtstrahls (As) zusätzliche Blendenkanten (Bkz1 bis Bkzn) der Blende (B) zugeordnet sind.

9. Prüfanordnung nach Anspruch 7, dadurch **gekennzeichnet**, daß die Blendenkanten (Bk1 bis Bkn) durch ein sägezahnförmiges Profil auf der Innenseite von einander gegenüberliegenden Seitenwänden (Sw) der Blende (B) gebildet sind.

10. Prüfanordnung nach Anspruch 8, dadurch **gekennzeichnet**, daß die zusätzlichen Blendenkanten (Bkz1 bis Bkzn) durch ein sägezahnförmiges Profil auf der Innenseite von einander gegenüberliegenden und gegensinnig geneigten Endwänden (Ew) der Blende (B) gebildet sind.

11. Prüfanordnung nach Anspruch 9 und Anspruch 10 , dadurch **gekennzeichnet**, daß die Blendenkanten (Bk1 bis Bkn) versetzt zu den zusätzlichen Blendenkanten (Bkz1 bis Bkzn) angeordnet sind.

12. Prüfanordnung nach Anspruch 11, dadurch **gekennzeichnet**, daß die beiden Seitenwände (Sw) und die beiden Endwände (Ew) der Blende (B) verstell- und justierbar miteinander verbunden sind.

13. Prüfanordnung nach einem der Ansprüche 7 bis 12, dadurch **gekennzeichnet**, daß die Breite (b1) des durch die erste Blendenkante (Bk1) gebildeten Blendenspaltes zumindest annähernd dem Durchmesser (d) des Abtastlichtstrahls (As) entspricht.

14. Prüfanordnung nach einem der vorhergehenden Ansprüche, dadurch **gekennzeichnet**, daß der Abstand (l) zwischen der ersten Blendenkante (Bk1) und der letzten Blendenkante (Bkn) zumindest dem 10-fachen Wert des Durchmessers (d) des Abtastlichtstrahls (As) entspricht.

15. Prüfanordnung nach Anspruch 14, dadurch **gekennzeichnet**, daß der Abstand (l) zwischen der ersten Blendenkante (Bk1) und der letzten Blendenkante (Bkn) etwa dem 100-fachen bis 200-fachen Wert des Durchmessers (d) des Abtastlichtstrahls (As) entspricht.

**Claims**

1. Test arrangement for the contactless ascertainment of flaws in non-structured surfaces, with
   - a device for the generation of a scanning light beam (E1),
   - a device for collecting the light (E2) deflected at a flaw and with
   - an optoelectronic receiver (E) for detection of the collected light,
   - a diaphragm (B) being fitted in the beam path of the scanning light beam (As), characterized in that the diaphragm (B) for reducing the proportion of scattered light has at least two diaphragm edges (Bk1, Bk2), which are arranged one behind the other in such a way that each succeeding diaphragm edge (Bk2) at least partially captures the light diffracted by the preceding diaphragm edge (Bk1) into the shadow space.

2. Test arrangement according to Claim 1, characterized in that the diaphragm edges (Bk1, Bk2) are arranged one behind the other in such a way that each succeeding diaphragm edge (Bk2) cuts into the first secondary maximum of the light diffracted by the preceding diaphragm edge (Bk1) into the assigned shadow space (Sr1).

3. Test arrangement according to Claim 1 or 2, characterized in that the diaphragm (B) has a multiplicity of diaphragm edges (Bk1 to Bkn), arranged one behind the other.

4. Test arrangement according to one of the preceding claims, characterized in that the diaphragm edges (Bk1 to Bkn) are designed as sharp knife edges.

5. Test arrangement according to one of the preceding claims, characterized in that the regions of the diaphragm (B) lying between the diaphragm edges (Bk1 to Bkn) have a light-absorbing surface.

6. Test arrangement according to one of the preceding claims, in which a deflecting device (Ae) is arranged in the beam path of the scanning light beam (As) and in which, seen in the direction of the scanning light beam (As), the diaphragm (B) is arranged after the deflecting device (Ae).

7. Test arrangement according to Claim 6, characterized in that the diaphragm edges (Bk1 to Bkn) are in each case aligned parallel to the plane of deflection of the scanning light beam (As).

8. Test arrangement according to Claim 7, characterized in that the extreme positions of the scanning light beam (As) produced by the deflecting device (Ae) are assigned additional diaphragm edges (Bkz1 to Bkzn) of the diaphragm (B).

9. Test arrangement according to Claim 7, characterized in that the diaphragm edges (Bk1 to Bkn) are formed by a sawtooth-shaped profile on the inside of mutually opposite side walls (Sw) of the diaphragm (B).

10. Test arrangement according to Claim 8, characterized in that the additional diaphragm edges (Bkz1 to Bkzn) are formed by a sawtooth-shaped profile on the inside of mutually opposite and mutually inclined end walls (Ew) of the diaphragm (B).

11. Test arrangement according to Claim 9 and Claim 10, characterized in that the diaphragm edges (Bk1 to Bkn) are arranged offset with respect to the additional diaphragm edges (Bkz1 to Bkzn).

12. Test arrangement according to Claim 11, characterized in that the two side walls (Sw) and the two end walls (Ew) of the diaphragm (B) are variably and adjustably interconnected.

13. Test arrangement according to one of Claims 7 to 12, characterized in that the width (b1) of the diaphragm slit formed by the first diaphragm edge (Bk1) corresponds at least approximately to the diameter (d) of the scanning light beam (As).

14. Test arrangement according to one of the preceding claims, characterized in that the distance (1) between the first diaphragm edge (Bk1) and the last diaphragm edge (Bkn) corresponds to at least 10 times the value of the diameter (d) of the scanning light beam (As).

15. Test arrangement according to Claim 14, characterized in that the distance (1) between the first diaphragm edge (Bk1) and the last diaphragm edge (Bkn) corresponds approximately to 100 times to 200 times the value of the diameter (d) of the scanning light beam (As).

**Revendications**

1. Dispositif de contrôle pour la détection, sans contact, de défauts dans des surfaces non structurées avec
   – un agencement pour produire un rayon lumineux de balayage (E1),
   – un agencement pour rassembler la lumière (E2) déviée au niveau d'un point défectueux, et avec
   – un récepteur optoélectronique (E) pour détecter la lumière rassemblée, du type dans lequel un diaphragme (B) est placé dans la trajectoire du rayon lumineux (As), caractérisé par le fait que le diaphragme (B) qui sert à réduire la part de la lumière diffusée comporte au moins deux arêtes de diaphragme (Bk1, Bk2) qui sont disposées de telle façon l'une derrière l'autre que chaque arête de diaphragme aval (Bk2) capte au moins partiellement la lumière diffractée dans la zone d'ombre par l'arête de diaphragme précédente (Bk1).

2. Dispositif de contrôle selon la revendication 1, caractérisé par le fait que les arêtes de diaphragme (Bk1, Bk2) sont disposées de telle façon l'une derrière l'autre que chaque arête de diaphragme aval (Bk2) entame le premier maximum secondaire de la lumière diffractée par l'arête de diaphragme précédente (Bk1), dans la zone d'ombre (Sr1) associée.

3. Dispositif de contrôle selon la revendication 1 ou 2, caractérisé par le fait que le diaphragme (B) comporte plusieurs arêtes de diaphragme (Bk1 à Bkn) disposées les unes derrière les autres.

4. Dispositif de contrôle selon l'une des revendications précédentes, caractérisé par le fait que les arêtes de diaphragme (Bk1 à Bkn) sont réalisées sous la forme d'arêtes vives.

5. Dispositif de contrôle selon l'une des revendications précédentes, caractérisé par le fait que les parties du diaphragme (B) qui sont situées entre les arêtes de diaphragme (Bk1 à Bkn), comportent une surface absorbant la lumière.

6. Dispositif de contrôle selon l'une des revendications précédentes, dans lequel un dispositif de déviation (Ae) est disposé dans le trajet du rayon lumineux de balayage (As), et dans lequel le diaphragme (B) est situé après le dispositif de déviation (Ae) lorsque l'on regarde dans la direction du rayon lumineux de balayage (As).

7. Dispositif de contrôle selon la revendication 6, caractérisé par le fait que les arêtes de diaphragme (Bk1 à Bkn) sont respectivement alignées en parallèle au plan de déviation du rayon lumineux de balayage (As).

8. Dispositif de contrôle selon la revendication 7, caractérisé par le fait qu'aux positions extrêmes qui sont produites par le dispositif de déviation (Ae) du rayon lumineux de balayage (As), sont associées des arêtes de diaphragme supplémentaires (Bkz1 à Bkzn) du diaphragme (B).

9. Dispositif de contrôle selon la revendication 7, caractérisé par le fait que les arêtes de diaphragme (Bk1 à Bkn) sont formées par un profil en dents de scie ménagé sur le côté intérieur de parois latérales (Sw) du diaphragme (B) qui se situent l'une en face de l'autre.

10. Dispositif de contrôle selon la revendication 8, caractérisé par le fait que les arêtes de diaphragme supplémentaires (Bkz1 à Bkzn) sont formées par un profil en dents de scie ménagé sur le côté intérieur de parois d'extrémité (Ew) du diaphragme (B), qui se situent l'une en face de l'autre et qui sont inclinées en sens contraire l'une par rapport à l'autre.

11. Dispositif de contrôle selon la revendication 9 et la revendication 10, caractérisé par le fait que les arêtes de diaphragme (Bk1 à Bkn) sont disposées avec décalage par rapport aux arêtes de diaphragme supplémentaires (Bkz1 à Bkzn).

12. Dispositif de contrôle selon la revendication 11, caractérisé par le fait que les deux parois latérales (Sw) et les deux parois d'extrémité (Ew) du diaphragme (B) sont reliées entre elles de façon à pouvoir être déplacées et à être ajustées.

13. Dispositif de contrôle selon l'une des revendications 7 à 12, caractérisé par le fait que la largeur (b1) de la fente de diaphragme qui est formée par le premier bord de diaphragme (Bk1) correspond, au moins approximativement au diamètre (d) du rayon lumineux de balayage (As).

14. Dispositif de contrôle selon l'une des revendications précédentes, caractérisé par le fait que la distance (1) entre la première arête de diaphragme (Bk1) et la dernière arête de diaphragme (Bkn) correspond, au moins, à 10 fois la valeur du diamètre (d) du rayon lumineux de balayage (As).

15. Dispositif de contrôle selon la revendication 14, caractérisé par le fait que la distance (1) entre la première arête de diaphragme (Bk1) et la dernière arête de diaphragme (Bkn), correspond, a peu près, à 100 à 200 fois la valeur du diamètre (d) du rayon lumineux de balayage (As).

# FIG 1

# FIG 2

FIG 3

FIG 4

FIG 5